# FASCICULE DE BREVET EUROPEEN

(11) **EP 2 723 592 B1**
(45) Date de publication et mention de la délivrance du brevet: **30.09.2015**
(21) Numéro de dépôt: 12734968.6
(22) Date de dépôt: 19.06.2012
(51) Int. Cl.: B60K 5/12, B60K 5/04

(54) **SYSTEME DE RETENU D'UN GROUPE MOTOPROPULSEUR**
HALTESYSTEM FÜR MOTORANTRIEBSEINHEIT
MOTOR PROPULSION GROUP RETENTION SYSTEM

(30) Priorité: 24.06.2011 FR 1155641
(43) Date de publication de la demande: 30.04.2014
(73) Titulaire: PSA Peugeot Citroën Automobiles S.A., 78140 Velizy Villacoublay (FR)
(72) Inventeur: FERRO, Jose, Christophe, F-92100 Boulogne Billancourt (FR)
(86) Numéro de dépôt international: PCT/FR2012/051372
(87) Numéro de publication internationale: WO 2012/175859

(56) Documents cités:
- EP-A2- 1 225 072
- DE-A1- 19 650 348
- FR-A1- 2 776 244
- FR-A1- 2 927 278

## Description

La présente invention concerne un système de retenu d'un groupe motopropulseur sur la caisse d'un véhicule automobile, ainsi qu'un véhicule automobile équipé d'un tel système de retenu.

Les groupes motopropulseurs placés en position transversale à l'avant des véhicules, comportent généralement deux supports principaux de fixation sur la caisse de ce véhicule, qui supportent la masse de ce groupe.

Un troisième point de fixation appelé biellette de reprise de couple, généralement située en arrière du groupe motopropulseur, constitue un système de retenu reliant ce groupe au berceau avant en reprenant les efforts venant en réaction du couple appliqué sur les roues motrices, pour empêcher le groupe motopropulseur de basculer autour de l'axe formé par les deux supports principaux.

La biellette de reprise de couple comporte généralement un axe disposé longitudinalement, qui se termine à chaque extrémité par une liaison comportant un bloc élastique pour filtrer les vibrations venant du groupe motopropulseur, et éviter de les transmettre à la caisse.

La biellette de reprise de couple assure un maintien du type isostatique du groupe motopropulseur, en empêchant un basculement de ce groupe sans générer de contraintes importantes dans les fixations, ce qui permet aux blocs élastiques de filtrer convenablement les vibrations.

Par ailleurs les véhicules automobiles subissent des essais de chocs, en particulier de chocs avant, pour en cas d'accident limiter les déformations de l'habitacle et protéger les passagers d'intrusions d'organes mécaniques se trouvant dans le compartiment moteur, qui pourraient les blesser.

En particulier en cas de choc important sur l'avant du véhicule, le groupe motopropulseur recevant ce choc tend à reculer, la biellette de reprise de couple pivotant alors autour de ses liaisons élastiques, guide le moteur qui tend à basculer vers le haut ou le bas suivant le sens de pivotement de cette biellette.

Un problème qui se pose alors est d'éviter un mouvement du groupe motopropulseur vers le haut, qui risquerait de provoquer une intrusion de ce groupe, en particulier de parties arrière saillantes comme le différentiel, dans le tablier séparant l'habitacle du compartiment moteur.

Pour répondre à ce problème, une solution connue présentée notamment par le document FR-A1-2776244, qui sert de base pour la présentation en deux parties de la revendication 1, comporte une biellette de reprise de couple comprenant une liaison avant fixée sur le groupe motopropulseur en en point qui est plus bas que la liaison arrière fixée sur le berceau. De cette manière la biellette pourra plus facilement basculer vers le bas en cas de choc avant.

Cependant, il n'est pas toujours possible de disposer la liaison avant en un point qui est plus bas que la liaison arrière.

La présente invention a notamment pour but de réaliser de manière simple et économique, un système de retenu assurant un guidage efficace du groupe motopropulseur en cas de choc avant.

Elle propose à cet effet un système de retenu d'un groupe motopropulseur sur la caisse d'un véhicule automobile, comportant une biellette de reprise de couple située en arrière du groupe motopropulseur, qui relie ce groupe à la caisse du véhicule, cette biellette disposée suivant un axe sensiblement longitudinale, comportant à chaque extrémité une liaison pouvant pivoter en cas de choc, caractérisé en ce qu'il comporte de plus un bras lié à la caisse du véhicule, comprenant une butée verticale venant au dessus de la biellette, formant une butée rigide qui limite le pivotement de cette biellette vers le haut.

Un avantage du système de retenu selon l'invention, est que le bras lié à la caisse du véhicule constitue un moyen simple pour en cas de choc entraînant un recul du groupe motopropulseur, empêcher la biellette de basculer vers le haut, et diriger ce groupe vers le bas afin de limiter son intrusion dans l'habitacle, en canalisant l'énergie du choc vers les voies basses du véhicule plus propices à l'absorption de l'effort venant de ce choc.

Le système de retenu selon l'invention peut comporter de plus une ou plusieurs des caractéristiques suivantes, qui peuvent être combinées entre elles.

Suivant un mode de réalisation, le bras est fixé à un berceau avant lié à la caisse du véhicule.

Avantageusement, le bras est formé par une tôle.

Avantageusement, la tôle du bras forme un plan sensiblement horizontal comprenant des nervures de rigidification, qui est disposé au dessus de la biellette.

Le bras peut être fixé par une vis comportant un axe sensiblement vertical.

En variante, la tôle peut être directement soudée au berceau avant, ou être intégrée au berceau, et formée par une découpe particulière d'une des tôles constituant ce berceau.

La biellette de reprise de couple peut être reliée à l'avant au groupe motopropulseur, par une chape comprenant un axe transversal et enserrant un bloc élastique, formant la liaison avant.

La biellette de reprise de couple peut aussi être reliée à l'arrière à la caisse du véhicule, par une chape comprenant un axe vertical et enserrant un bloc élastique, formant la liaison arrière.

En complément, le bras peut comporter à son extrémité avant une butée horizontale, prévue pour se trouver un peu en arrière d'une butée correspondante du carter du groupe motopropulseur.

L'invention a aussi pour objet un véhicule automobile comprenant un groupe motopropulseur fixé à l'avant, qui est lié à la caisse du véhicule par un système de retenu comportant l'une quelconque des caractéristiques précédentes.

L'invention sera mieux comprise et d'autres caractéristiques et avantages apparaîtront plus clairement à la lecture de la description ci-après donnée à titre d'exemple en référence aux dessins annexés dans lesquels :
- la figure 1 est un schéma de principe d'un système de retenu selon l'invention ;
- la figure 2 est une vue de côté d'un système de retenu réalisé selon ce schéma, reliant le carter d'un moteur au berceau de la caisse du véhicule ; et
- la figure 3 est une autre vue de ce système de retenu.

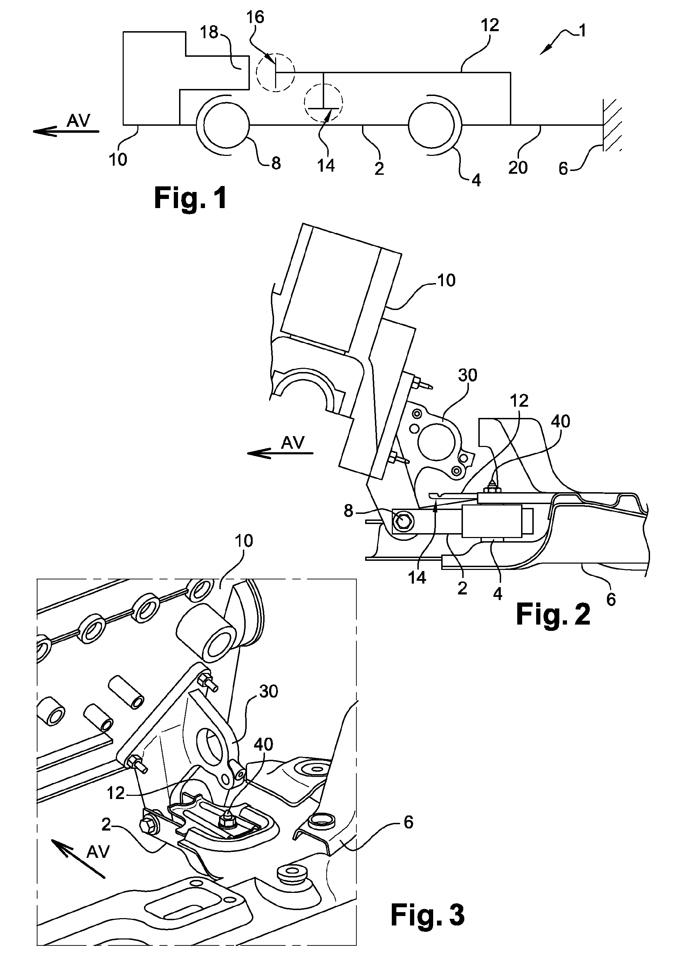

La figure 1 présente un système de retenu 1 comportant une biellette de reprise de couple 2 qui relie un groupe motopropulseur comprenant un moteur thermique 10 disposé à l'avant du véhicule, à la caisse de ce véhicule.

La biellette 2 comporte du côté avant indiqué par une flèche notée AV, une liaison avant 8 pouvant pivoter, qui est reliée au carter du moteur 10, et à l'arrière une autre liaison arrière 4 pouvant aussi pivoter, qui est reliée à un berceau avant 6 fixé à la caisse du véhicule.

Avantageusement, les liaisons 4, 8 comportent des éléments élastiques qui filtrent des vibrations émises par le groupe motopropulseur, et qui permettent aussi un petit pivotement de ces liaisons représentées schématiquement par des liaisons du type rotule.

La liaison arrière 4 est fixée à l'avant d'un support 20 relié au berceau 6 de la caisse. Un bras 12 fixé de manière rigide par son extrémité arrière au support 20 relié au berceau 6, s'étend au dessus de la biellette 2, parallèlement à cette biellette.

L'extrémité avant du bras 12 comporte une butée horizontale 16, qui se trouve un peu en arrière d'une butée correspondante 18 du carter du moteur 10. La partie avant du bras 12 comporte aussi une butée verticale 14 tournée vers le bas, qui se trouve un peu au dessus de la biellette 2, en un point situé vers l'avant de cette biellette.

Les butées verticale 14 et horizontale 16 constituent des appuis qui en en cas de choc sur le moteur 10 vers l'arrière, limitent les mouvements et empêchent un recul plus important du groupe motopropulseur, ainsi qu'un pivotement vers le haut de la biellette 2. Ces limitations forcent le groupe motopropulseur en cas de choc violent, à glisser vers le bas et à passer sous le tablier du véhicule, de manière à protéger les passagers se trouvant derrière ce tablier.

Les figures 2 et 3 présentent le carter 10 d'un moteur, comprenant en partie arrière un support moteur 30 disposé suivant un plan vertical, comportant un alésage prévu pour recevoir le roulement d'un arbre de transmission de roue disposé transversalement. Un différentiel de la boîte de vitesses non représentée, forme aussi un bossage tourné vers l'arrière du groupe motopropulseur, comportant deux sorties latérales qui entraînent les arbres de roue.

La biellette de reprise de couple 2 comporte à l'avant une chape traversé par une vis comprenant un axe transversal, le carter 10 du moteur étant maintenu dans cette chape par un bloc élastique traversé par cette vis, pour former la liaison élastique avant 8 pouvant pivoter autour de l'axe transversal.

La biellette de reprise de couple 2 comporte à l'arrière un bloc élastique traversé par une vis comprenant un axe vertical, et maintenu dans une chape formée par le berceau 6 comprenant deux tôles parallèles venant au dessus et en dessous de ce bloc élastique, pour former la liaison élastique arrière 4. On notera que le bloc élastique de la liaison arrière 4 est assez souple pour permettre un petit pivotement de la biellette 2 dans un plan vertical.

Une tôle 12 fixée solidement au berceau 6 par une vis 40 comprenant un axe vertical, forme un plan sensiblement horizontal comportant des nervures de rigidification, qui est positionné au dessus de la biellette 2. L'extrémité avant de la tôle 12 se trouvant un peu au dessus de la partie avant de la biellette 2, constitue une butée verticale 14 qui empêche un pivotement de cette biellette vers le haut autour de la liaison arrière 4 en cas de choc sur le moteur 10, et donc une remontée de ce moteur.

On réalise ainsi simplement et de manière économique, par une simple tôle 12 obtenue par emboutissage et découpe, et comportant une masse réduite, une butée rigide qui évite en cas d'accident des intrusions dans l'habitacle de parties arrière du groupe motopropulseur, en particulier le différentiel de la boîte de vitesses, un turbocompresseur ou un collecteur d'échappement.

En complément la tôle 12 pourrait comporter à son extrémité avant, une butée horizontale venant en face d'une partie arrière du moteur 10, de manière à regrouper les deux fonctions de butées horizontale et verticale sur une même pièce pour réduire les coûts.

Une tôle rapportée 12 permet d'utiliser un berceau standard 6 sur lequel on peut ajouter suivant les types de véhicules, cette tôle formant la butée de biellette 2. Ce montage d'une tôle rapportée 12 permet aussi de garder un procédé d'assemblage du véhicule sur les chaînes de montage, qui reste équivalent.

En variante la tôle 12 peut être directement soudée au berceau avant 6. Elle peut aussi être intégrée au berceau 6, en étant formée par une découpe particulière d'une des tôles constituant ce berceau.

## Revendications

1. Système de retenu d'un groupe motopropulseur (10) sur la caisse d'un véhicule automobile (6), comportant une biellette de reprise de couple (2) située en arrière du groupe motopropulseur, qui relie ce groupe à la caisse du véhicule, cette biellette (2) disposée suivant un axe sensiblement longitudinale, comportant à chaque extrémité une liaison (4, 8) pouvant pivoter en cas de choc, **caractérisé en ce qu'**il comporte de plus un bras (12) lié à la caisse du véhicule (6), comprenant une butée verticale (14) venant au dessus de la biellette (2), formant une butée rigide qui limite le pivotement de cette biellette vers le haut.

2. Système de retenu selon la revendication 1, **caractérisé en ce que** le bras (12) est fixé à un berceau avant (6) lié à la caisse du véhicule.

3. Système de retenu selon la revendication 1 ou 2, **caractérisé en ce que** le bras (12) est formé par une tôle.

4. Système de retenu selon la revendication 3, **caractérisé en ce que** la tôle du bras (12) forme un plan sensiblement horizontal comprenant des nervures de rigidification, qui est disposé au dessus de la biellette (2).

5. Système de retenu selon l'une quelconque des revendications précédentes, **caractérisé en ce que** le bras est fixé par une vis (40) comportant un axe sensiblement vertical.

6. Système de retenu selon les revendications 2 et 3, **caractérisé en ce que** la tôle (12) est directement soudée au berceau avant (6), ou est intégrée au berceau, en étant formée par une découpe particulière d'une des tôles constituant le berceau.

7. Système de retenu selon l'une quelconque des revendications précédentes, **caractérisé en ce que** la biellette de reprise de couple (2) est reliée à l'avant au groupe motopropulseur (10), par une chape comprenant un axe transversal et enserrant un bloc élastique, formant la liaison avant (8).

8. Système de retenu selon l'une quelconque des revendications précédentes, **caractérisé en ce que** la biellette de reprise de couple (2) est reliée à l'arrière à la caisse du véhicule (6) par une chape comprenant un axe vertical et enserrant un bloc élastique, formant la liaison arrière (4).

9. Système de retenu selon l'une quelconque des revendications précédentes, **caractérisé en ce que** le bras (12) comporte à son extrémité avant une butée horizontale (16), prévue pour se trouver un peu en arrière d'une butée correspondante (18) du carter du groupe motopropulseur.

10. Véhicule automobile comprenant un groupe motopropulseur (10) fixé à l'avant, **caractérisé en ce que** ce groupe motopropulseur est lié à la caisse (6) du véhicule par un système de retenu (1) réalisé suivant l'une quelconque des revendications précédentes.

## Patentansprüche

1. Haltesystem einer Motorantriebseinheit (10) auf der Karosserie eines Kraftfahrzeugs (6), das einen Schwingarm zur Momentübernahme (2) umfasst, der hinter der Motorantriebseinheit liegt, der diese Einheit mit der Karosserie des Fahrzeugs verbindet, wobei dieser Schwingarm (2) entlang einer Achse verläuft, die im Wesentlichen längs ist, die an jedem Ende eine Verbindung (4, 8) umfasst, die bei einem Aufprall schwenken kann, **dadurch gekennzeichnet, dass** es außerdem einen Arm (12), der mit der Karosserie des Fahrzeugs (6) verbunden ist, umfasst, der einen vertikalen Anschlag (14) umfasst, der oberhalb des Schwingarms (2) zu liegen kommt, der einen starren Anschlag bildet, der das Schwenken dieses Schwingarms nach oben einschränkt.

2. Haltesystem nach Anspruch 1, **dadurch gekennzeichnet, dass** der Arm (12) an einem vorderen Sattel (6), der mit der Karosserie des Fahrzeugs verbunden ist, befestigt ist.

3. Haltesystem nach Anspruch 1 oder 2, **dadurch gekennzeichnet, dass** der Arm (12) aus einem Blech ausgebildet ist.

4. Haltesystem nach Anspruch 3, **dadurch gekennzeichnet, dass** das Blech des Arms (12) eine im Wesentlichen horizontale Ebene bildet, die Versteifungsrippen umfasst, die oberhalb des Schwingarms (2) angeordnet ist.

5. Haltesystem nach einem der vorhergehenden Ansprüche, **dadurch gekennzeichnet, dass** der Arm durch eine Schraube (40) befestigt ist, die eine im Wesentlichen vertikale Achse umfasst.

6. Haltesystem nach den Ansprüchen 2 und 3, **dadurch gekennzeichnet, dass** das Blech (12) direkt an den vorderen Sattel (6) geschweißt ist oder in den Sattel eingebaut ist, indem es durch einen speziellen Ausschnitt eines der Bleche, die den Sattel bilden, geformt ist.

7. Haltesystem nach einem der vorhergehenden Ansprüche, **dadurch gekennzeichnet, dass** der Schwingarm zur Momentübernahme (2) an der Vorderseite mit der Motorantriebseinheit (10) durch eine Gabel verbunden ist, die eine Querachse umfasst und einen elastischen Block, der die vordere Verbindung (8) bildet, einschließt.

8. Haltesystem nach einem der vorhergehenden Ansprüche, **dadurch gekennzeichnet, dass** der Schwingarm zur Momentübernahme (2) an der Rückseite mit der Fahrzeugkarosserie (6) durch eine Gabel verbunden ist, die eine vertikale Achse umfasst, und einen elastischen Block, der die hintere Verbindung (4) bildet, einschließt.

9. Haltesystem nach einem der vorhergehenden Ansprüche, **dadurch gekennzeichnet, dass** der Arm (12) an seinem vorderen Ende einen horizontalen Anschlag (16) umfasst, der vorgesehen ist, um etwas hinter einem entsprechenden Anschlag (18) des Gehäuses der Motorantriebseinheit zu liegen.

10. Kraftfahrzeug, das eine Motorantriebseinheit (10) umfasst, die an der Vorderseite befestigt ist, **dadurch gekennzeichnet, dass** die Motorantriebseinheit mit der Karosserie (6) des Fahrzeugs durch ein Haltesystem (1) verbunden ist, das nach einem der vorhergehenden Ansprüche hergestellt ist.

## Claims

1. A system for retaining a power unit (10) on the body of a motor vehicle (6), comprising a torque-reacting link rod (2) situated behind the power unit, which connects this unit to the body of the vehicle, this link rod (2), arranged along a substantially longitudinal axis, comprising at each end a connection (4, 8) that can pivot in the event of an impact, **characterized in that** it additionally comprises an arm (12) connected to the body of the vehicle (6), including a vertical stop (14) coming above the link rod (2), forming a rigid stop that limits the upward pivoting of this link rod.

2. The retention system according to Claim 1, **characterized in that** the arm (12) is fixed to a front cradle (6) connected to the body of the vehicle.

3. The retention system according to Claim 1 or 2, **characterized in that** the arm (12) is formed by a sheet metal plate.

4. The retention system according to Claim 3, **characterized in that** the sheet metal plate of the arm (12) forms a substantially horizontal plane including stiffening ribs, which is arranged above the link rod (2).

5. The retention system according to any one of the preceding claims, **characterized in that** the arm is fixed by a screw (40) comprising a substantially vertical axis.

6. The retention system according to Claims 2 and 3, **characterized in that** the sheet metal plate (12) is welded directly to the front cradle (6), or is integrated to the cradle, by being formed by a particular cutout of one of the sheet metal plates constituting the cradle.

7. The retention system according to any one of the preceding claims, **characterized in that** the torque-reacting link rod (2) is connected at the front to the power unit (10) by a yoke including a transverse axis and enclosing an elastic block, forming the front connection (8).

8. The retention system according to any one of the preceding claims, **characterized in that** the torque-reacting link rod (2) is connected at the rear to the body of the vehicle (6) by a yoke including a vertical axis and enclosing an elastic block, forming the rear connection (4).

9. The retention system according to any one of the preceding claims, **characterized in that** the arm (12) comprises at its front end a horizontal stop (16), provided to be situated slightly at the rear of a corresponding stop (18) of the casing of the power unit.

10. A motor vehicle including a power unit (10) fixed at the front, **characterized in that** this power unit is connected to the body (6) of the vehicle by a retention system (1) realized according to any one of the preceding claims.
